# EUROPEAN PATENT SPECIFICATION

(11) **EP 0 661 124 B1**
(45) Date of publication and mention of the grant of the patent: **31.03.1999**
(21) Application number: 95102817.4
(22) Date of filing: 19.05.1993
(51) Int. Cl.: B23C 3/00, B23C 1/00

(54) **Method of machining composites**
Verfahren zum Bearbeiten von Verbundwerkstoffen
Méthode pour l'usinage des matériaux composites

(30) Priority: 15.09.1992 SE 9202658
(43) Date of publication of application: 05.07.1995
(62) Divisional of application: 93850111.1
(73) Proprietor: SANDVIK AKTIEBOLAG, 811 81 Sandviken (SE)
(72) Inventor: Thelin, Anders, S-811 61 Sandviken (SE)
(74) Representative: Taquist, Lennart

(56) References cited:
- EP-A- 0 160 798
- DE-A- 2 113 746
- DE-A- 3 314 049
- DE-U- 9 001 101
- FR-A- 2 403 712
- US-A- 4 757 645

## Description

The present invention relates to a method of machining and shaping a through opening in a fibre reinforced composite material.

International patent application WO-A-93/23200 (& EP-A-0 641 272, prior art according to Art.54(3) EPC) discloses a method of machining and shaping a through opening with damagefree edges in a fibre reinforced composite material with high precision by placing a rotation symmetrical grinding body in a preformed hole with the composite material being oriented in such a way that the axis of rotation of the grinding body is essentially perpendicular to the longitudinal direction of the fibres at the edge of the opening. The opening is machined and shaped by the grinding body partly rotating around its own axis, partly performing a revolving motion relatively to the edge of the opening. The grinding tool may be used also for preforming of the opening.

It has now turned out that by using a milling body significantly higher rate of cutting, less heat generation as well as better machining economy can be obtained. This has been attained by the features of claim 1. By using a so called drilling mill the whole operation can be performed with only one tool.

The invention is described closer in the following under reference to the accompanying drawings which are not embodiments of the invention but show examples useful for understanding the invention.

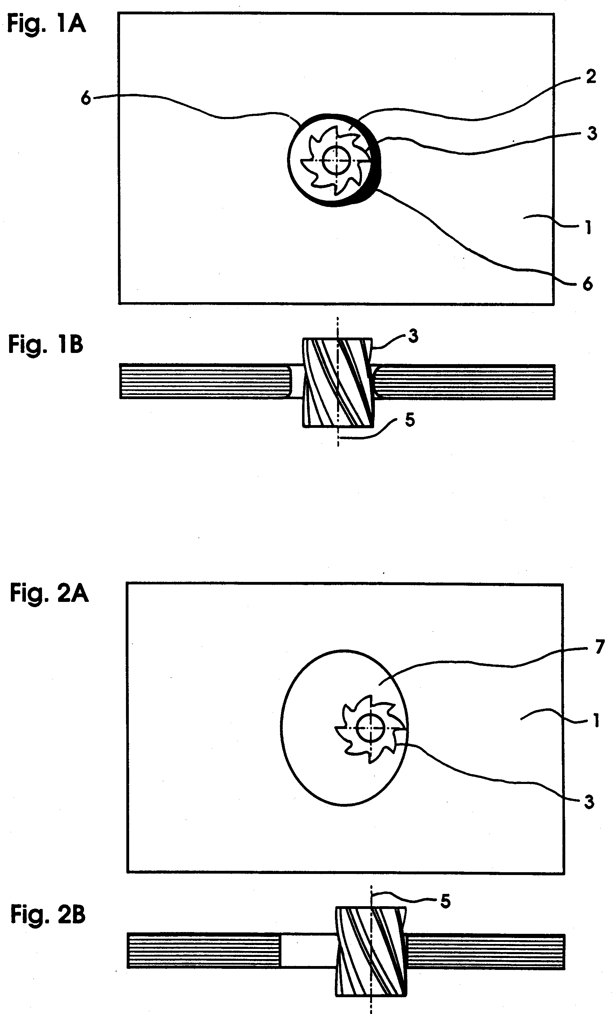

Figures 1 and 2 illustrate how a through opening is shaped in a fibre reinforced composite plate using a rotation symmetrical milling body according to the invention. In figure 1, 1 is fibre reinforced laminate, 2 - preformed hole, 3 - milling body, 5 - axis of rotation of the milling body and 6 - damages and/or defects.

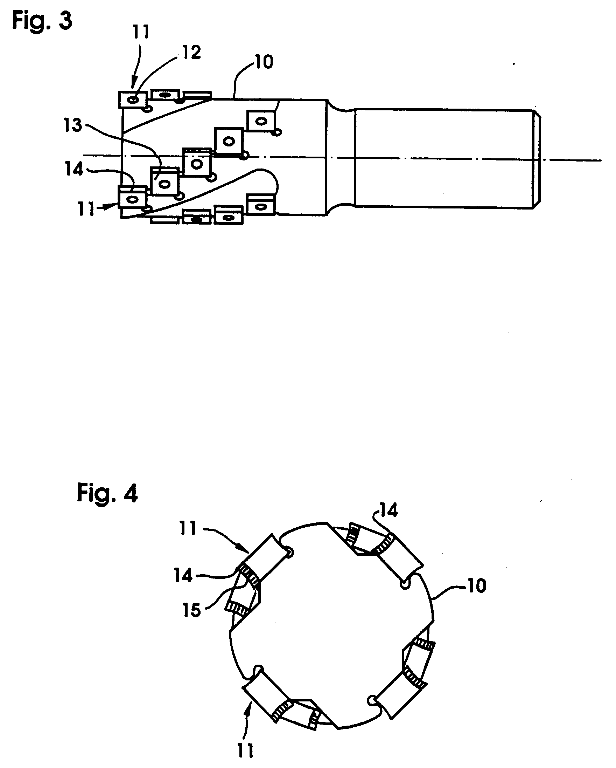

Figure 3 shows a side view of a milling cutter provided with inserts according to the invention and figure 4 shows a top view of the mill in figure 3. In figures 3 and 4, 10 is - milling body, 11 - insert, 12 - central hole in the insert, 13 - side surface, 14 - clearance face and 15 - edge surface.

The method is described for the case that the material is present in form of a plane plate 1, a laminate composed of a number of lamellas containing continuous fibre reinforcements whereby the lamellas are piled on top of each other. The fibres lie oriented in planes parallel to the plane of the laminate, whereby the fibre directions are 0°, 90°, 45° and -45°. An opening 2 in the laminate is shaped first by, for example, drilling. Hereby damages and/or other defects 6 frequently arise at the edge of the opening. In the preformed hole 2 a rotation symmetrical milling body 3 is placed. Hereby the laminate is oriented in such a way that the axis of rotation of the milling body 5 is perpendicular to the longitudinal direction of the fibres, i.e., perpendicular to the plane of the laminate. The opening 2 is machined by the milling body 3 partly rotating around its own axis 5, partly performing a translational movement relatively to the edge of the opening 2 so that damages and other defects 6 are removed. The size and/or form of the finished opening differ substantially from that of the preformed hole 3.

The milling body is suitably a so called milling cutter in high speed steel, solid cemented carbide or with brazed or indexable inserts of cemented carbide, titaniumbased carbonitride alloy, so called cermet, or ceramics. The milling cutter (if high speed steel or cemented carbide) or the inserts are preferably coated with at least one thin layer of wear resistant material with in itself known CVD-and PVD-methods such as TiC, TiN and/or Al₂O₃. A thin layer of diamond is particularly suitable. The total thickness of the layer is <20 µm, preferably 2-10 µm.

For making larger openings a milling cutter with the design shown in fig 3 and 4 is particularly suitable. It consists of a milling body 10 equipped with thereto removable inserts 11. The inserts 11 are in the shown case provided with a central hole 12 through the insert, wherein a threaded locking pin (not shown) is inserted to clamp the insert. When machining the milling cutter rotates counterclockwise in fig 4 whereby the side surface of the insert 13 forms the clearance face of the cutting edge 14 and the edge surface 15 forms the rake face of the cutting edge. A number of inserts 11 are at the shown embodiment arranged in a spiral path in the 10 longitudinal direction of the milling body. Four such spiral paths are uniformly distributed around the circumference of the milling body 10.

## Claims

1. Method of machining and shaping a through opening in a fiber reinforced composite material (1) with damagefree edges by a machining operation whereby one rotation symmetrical milling body (3) is brought into engagement with said composite material by partly rotating around its own axis (5), comprising the steps of
A) providing said body in the shape of a drilling endmill with smaller diameter than the finished opening having a body defining a longitudinal axis of rotation, and a plurality of cutting edges disposed uniformly on an outer periphery of said body, extending generally spirally about said axis of rotation,
B) forming a initial hole (2) in the composite by rotating said endmill and bringing said endmill into cutting engagement with said composite material, said axis of rotation oriented substantially perpendicular to a longitudinal direction of reinforcement fibers disposed at a edge of said initial hole, said edge of said initial opening having damages or defects (6) possessing a radial spread; thereafter
C) moving said endmill along said edge of said initial hole while rotating said endmill about said axis of rotation, with said axis of rotation offset radially from a center axis of said initial hole and with said cutting edges in contact with said edge of said initial hole so as to enlarge said initial hole into a finished opening, the size and/or geometry of the finished opening differing significantly from that of the initial hole; and
D) performing step C to remove a amount of said composite wherein a lower limit of said removed amount is defined by said radial spread of said damages or defects.

2. Method according to claim 1, **characterized** in that the milling body (3) is equipped with inserts (11) of cemented carbide.

3. Method according to claim 1, **characterized** in that the milling body (3) is equipped with inserts (11) of ceramics.

4. Method according to any of the claims 2-3, **characterized** in that the inserts (11) are coated with at least one thin layer of wear resistant material.

5. Method according to claim 4, **characterized** in that the inserts are coated with at least one thin layer of diamond.

## Patentansprüche

1. Verfahren zum Bearbeiten und Formen einer Durchgangsöffnung in einem faserverstärkten Verbundwerkstoff (1) mit zerstörungsfreien Kanten durch eine Bearbeitungsoperation, wobei ein rotationssymmetrischer Schleifkörper (3) in Anlage an den Verbundwerkstoff gebracht wird, indem er teils um seine eigene Achse (5) rotiert, mit den Stufen, in denen man
A. den Körper in der Form eines bohrenden Stirnfräsers mit einem kleineren Durchmesser als die fertige Öffnung vorsieht, der einen eine Längsrotationsachse definierenden Körper und mehrere gleichmäßig auf einem Außenumfang des Körpers, der sich allgemein spiralförmig um die Rotationsachse erstreckt, angeordnete Schneidkanten hat,
B. ein Anfangsloch (2) in dem Verbundwerkstoff durch Rotieren des Stirnfräsers bildet und den Stirnfräser in Schneidanlage an dem Verbundwerkstoff bringt, wobei die Rotationsachse im wesentlichen senkrecht zu einer Längsrichtung von Verstärkungsfasern ausgerichtet wird, die an einer Kante des Anfangsloches angeordnet sind, und wobei die Kante der Anfangsöffnung Zerstörungen oder Defekte (6) besitzt, die eine radiale Ausbreitung haben, danach
C. den Stirnfräser entlang der Kante des Anfangsloches bewegt, während man den Stirnfräser um die Rotationsachse dreht, wobei die Rotationsachse radial von der Mittelachse des Anfangsloches aus versetzt wird und wobei die Schneidkanten in Kontakt mit der Kante des Anfangsloches kommen, um so das Anfangsloch zu einer fertigen Öffnung zu vergrößern, und wobei sich die Größe und/oder Geometrie der fertigen Öffnung wesentlich von jenen des Anfangsloches unterscheidet, und
D. die Stufe C so durchführt, daß man eine Menge des Verbundwerkstoffes entfernt, wobei eine untere Grenze dieser entfernten Menge durch die radiale Ausbreitung der Zerstörungen oder Defekte begrenzt wird.

2. Verfahren nach Anspruch 1, **dadurch gekennzeichnet**, daß der Schleifkörper (3) mit Einsätzen (11) aus Sintercarbid versehen ist.

3. Verfahren nach Anspruch 1, **dadurch gekennzeichnet**, daß der Schleifkörper (3) mit Einsätzen (11) aus Keramik ausgestattet ist.

4. Verfahren nach einem der Ansprüche 2 und 3, **dadurch gekennzeichnet**, daß die Einsätze (11) mit wenigstens einer dünnen Schicht von verschleißbeständigem Material beschichtet sind.

5. Verfahren nach Anspruch 4, **dadurch gekennzeichnet**, daß die Einsätze mit wenigtens einer dünnen Diamantschicht beschichtet sind.

## Revendications

1. Procédé d'usinage et de façonnage d'un orifice traversant dans une matière composite renforcée avec des fibres (1) aux bords non endommagés au moyen d'une opération d'usinage dans laquelle un unique corps de fraise à symétrie cylindrique (3) est placé au contact de ladite matière composite tout en tournant entre autres autour de son propre axe (5), procédé comprenant les étapes suivantes :
A) fournir ledit corps sous la forme d'une perceuse-fraiseuse en bout possédant un diamètre inférieur à celui de l'orifice fini et dont le corps définit l'axe longitudinal de rotation, et un ensemble de bords de coupe placés de manière uniforme sur la périphérie externe dudit corps, et s'étendant d'une façon générale en spirale autour dudit axe de rotation,
B) former un trou initial (2) dans le composite en faisant tourner ladite fraise en bout et en amenant ladite fraise en bout au contact de coupe avec ladite matière composite, ledit axe de rotation étant orienté en gros perpendiculairement à la direction longitudinale des fibres de renforcement disposées au bord dudit trou initial, ledit bord dudit orifice initial présentant des dégâts et des défauts (6) qui possèdent une certaine étendue radiale ; puis
C) déplacer ladite fraise en bout le long dudit bord dudit trou initial tout en faisant tourner ladite fraise en bout autour dudit axe de rotation, ledit axe de rotation étant déporté radialement par rapport à l'axe central dudit trou initial, et lesdits bords de coupe étant en contact avec ledit bord dudit trou initial de manière à élargir ledit trou initial pour obtenir un orifice fini, la taille et/ou la forme de l'orifice fini étant notablement différentes de celles du trou initial ; et
D) mettre en oeuvre l'étape C de façon à ôter une certaine quantité dudit composite, une limite inférieure de ladite quantité ôtée étant définie par ladite étendue radiale desdits dégâts ou défauts.

2. Procédé selon la revendication 1, caractérisé en ce que le corps de fraise (3) est muni d'inserts (11) en carbure cémenté.

3. Procédé selon la revendication 1, caractérisé en ce que le corps de fraise (3) est muni d'inserts (11) en céramique.

4. Procédé selon l'une quelconque des revendications 2 ou 3, caractérisé en ce que les inserts (11) sont revêtus avec une couche mince au moins, faite d'une matière résistante à l'usure.

5. Procédé selon la revendication 4, caractérisé en ce que les inserts sont revêtus avec une couche mince au moins, en diamant.
